# FASCICULE DE BREVET EUROPEEN

(11) **EP 3 506 555 B1**
(45) Date de publication et mention de la délivrance du brevet: **09.09.2020**
(21) Numéro de dépôt: 18215808.9
(22) Date de dépôt: 21.12.2018
(51) Int. Cl.: H04L 9/08, H04L 29/06, H04W 12/04

(54) **PROCEDE DE SECURISATION DE BOUT EN BOUT D'UNE COMMUNICATION INTERCEPTABLE**
VERFAHREN ZUR ENDE-ZU-ENDE SICHERUNG VON ABFANGBARER KOMMUNIKATION
METHOD FOR END-TO-END SECURING OF INTERCEPTABLE COMMUNICATION

(30) Priorité: 27.12.2017 FR 1701383
(43) Date de publication de la demande: 03.07.2019
(73) Titulaire: Atos Integration, 95870 Bezons (FR)
(72) Inventeur: MARCHESE-RIBEAUX, Alexandre, 95300 Pontoise (FR)
(74) Mandataire: Debay, Damien

(56) Documents cités:
- US-A1- 2007 297 418
- US-A1- 2013 182 840
- US-A1- 2014 380 056
- US-A1- 2016 234 197

## Description

### Domaine de l'invention

L'invention a pour objet un procédé de sécurisation de bout en bout d'une communication interceptable.
Le domaine de l'invention est celui de la sécurisation de bout en bout d'une communication interceptable.
Par interceptable on entend ici la mise en place d'écoute légale permettant à des autorités administratives étatique de mettre en place une surveillance des communications même si celle-ci sont sécurisé de bout en bout.

### Etat de la technique antérieur

Dans l'état de la technique on connait le protocole MIKEY décrit par la RFC 3830 publiée en aout 2004.
Ce protocole permet la mise en place de scenario de distribution de clés de sessions entre des participants à une communication. Ces participants sont au moins deux, mais ils peuvent être plus nombreux.
Le principe de ce protocole est que le participant à l'initiative de la communication, aussi appelé le participant invitant, établit une communication avec un serveur de gestion de clé, aussi appelé serveur KMS, apte la mise en œuvre du protocole MIKEY.

Dans la pratique les participants utilisent un équipement terminal. Un équipement terminal est un téléphone intelligent, aussi appelé smartphone, sur lequel on a installé un logiciel de communication compatible avec le protocole SIP. Un tel téléphone s'appelle aussi un téléphone SIP ou un SIP-phone. Un tel logiciel est également installable sur une tablette ou un ordinateur individuel. L'installation d'un tel logiciel fait que l'on peut parler du dispositif sur lequel il est installé, comme d'un agent utilisateur.

Dans le contexte d'utilisation d'un protocole de communication on parle d'agent utilisateur souvent appelé UA (pour User Agent). Un agent utilisateur est un programme mis en œuvre par un équipement terminal pour établir et réaliser une communication selon ledit protocole de communication. Les agents utilisateurs sont mis en relation via un serveur proxy. Dans la littérature on confond souvent l'agent utilisateur, logiciel, avec le terminal utilisateur, matériel. La réunion du matériel et du logiciel est aussi appelée un équipement terminal.

Le protocole SIP est adapté pour obtenir des clés de sessions en les demandant à un serveur de gestion de clé en utilisant le protocole MIKEY.
Un équipement terminal invitant, c'est-à-dire à l'initiative de la création de la session de communication, commence par réaliser un échange protocolaire avec un serveur de gestion de clés.
Dans la pratique l'équipement terminal invitant émet à destination du serveur de gestion de clé un message d'initialisation de ticket. Un tel message comporte une liste d'identifiants parmi lesquels au moins :
- Un identifiant de l'équipement terminal invitant ;
- Un identifiant d'un équipement terminal invité.
En réponse l'équipement terminal invitant reçoit une réponse comportant :
- Un ticket,
- Une clé de session par identifiant présent dans le message d'initialisation de ticket.
L'équipement terminal invitant poursuit l'initialisation de la session en émettant un message d'invitation SIP vers un premier serveur intermédiaire, aussi appelé proxy SIP. Ce message d'invitation désigne le deuxième équipement terminal et comporte dans sa charge utile un paramètre dont le nom est « key-mgmt » et dont la valeur est le ticket reçu en réponse au message d'initialisation de ticket.
Le deuxième équipement terminal reçoit le message d'invitation SIP et effectue les deux actions suivantes :
- Emission d'un message de résolution de ticket vers le serveur de gestion de clés ce qui lui permet de recevoir :
   ∘ Une réponse ticket,
   ∘ Une clé de session par identifiant présent dans le message d'initialisation de ticket.
- Emission d'un message d'acceptation SIP. Ce message d'invitation désigne le premier équipement terminal et comporte dans sa charge utile un paramètre dont le nom est « key-mgmt » et dont la valeur est la réponse ticket reçu en réponse au message de résolution de ticket.
Le premier équipement terminal reçoit le message d'acceptation SIP et la communication commence.

Dans le scenario de l'état de la technique les équipements terminaux sont autonomes pour la gestion des clés de session, c'est-à-dire qu'ils sont les seuls à les connaître. Les communications ne sont donc pas interceptables, notamment au niveau du proxy SIP qui est le fournisseur de service. Le fournisseur de service est celui qui permet la tenue de la communication, qu'elle soit sécurisée ou non.

Une solution intermédiaire décrite par la demande US20160234197 consiste à proposer un serveur de gestion de clés auprès duquel les équipements, souhaitant communiquer, doivent d'abord procéder à un enregistrement, ce qui leur permet de recevoir chacun une clé respective, qui, lors de l'initiation de communication leur permettra de déchiffrer un message contenant la clé qui sera utilisée par la communication entre les 2 dispositifs.
Cependant, une telle solution n'est pas optimale pour une interception, l'intercepteur ayant en outre besoin de plusieurs données différentes afin de pouvoir effectivement déchiffrer la communication.

Une autre solution décrite par la demande US2007297418 propose un procédé de sécurisation de bout en bout d'une communication interceptable permettant de récupérer les clés de sessions par requête directement aux équipements, qui peuvent accepter ou refuser de répondre à la requête. Cela permet ainsi de pouvoir identifier les équipements qui ne coopèrent pas à ladite requête.

Une telle mise en œuvre, techniquement opérationnelle, ne satisfait pas aux exigences légales des états qui veulent pouvoir, au cas par cas, accéder au contenu de communication pour pourvoir réaliser une mission de maintien de l'ordre.

### Exposé de l'invention

L'invention résout ces problèmes en proposant d'utiliser un deuxième serveur intermédiaire entre le proxy SIP et le serveur de gestion de clés. Le deuxième serveur intermédiaire se comporte, vu du serveur de gestion de clés, comme un équipement terminal. Le deuxième serveur intermédiaire permet au premier serveur intermédiaire d'obtenir les éléments cryptographiques permettant l'interception, ou la réécoute, d'une communication.

Le deuxième serveur intermédiaire masque toute la complexité du protocole MIKEY au premier serveur intermédiaire. Les échanges entre le premier serveur intermédiaire et le deuxième serveur intermédiaire se font selon un protocole simple : HyperText Transfer Protocol (http, c'est-à-dire protocole de transfert de texte balisé).
Cette mise en œuvre permet une mise en œuvre simple sur tous les proxys SIP connus et à venir. En effet toute la complexité du protocole MIKEY est du côté du deuxième serveur intermédiaire.

Dans ce dessein l'invention a pour objet un procédé de sécurisation de bout en bout d'une communication interceptable entre au moins un premier équipement terminal et un deuxième équipement terminal, dans lequel :
- l'établissement de la communication se fait, via un premier serveur intermédiaire, qui communique en utilisant un protocole d'établissement de session permettant d'échanger des clés de sessions, chaque équipement terminal utilisant une clé de session pour chiffrer les données de communication qu'il émet,
- les clés de sessions sont distribuées par un serveur de gestion de clés qui communique en utilisant un protocole de gestion de clés,
le procédé comportant au moins les étapes suivantes, mises en œuvre par le premier serveur intermédiaire :
- réception d'un message d'invitation, émis par le premier équipement terminal, selon le protocole d'établissement de session, le message d'invitation invitant le deuxième équipement terminal et comportant un ticket selon le protocole de gestion de clés,
- réception d'un message d'acceptation du message d'invitation comportant un résultat du traitement du ticket par le deuxième équipement terminal,
caractérisé en ce que le procédé comporte également les étapes suivantes, mises en œuvre par le premier serveur intermédiaire :
- avant de transmettre le message d'invitation au deuxième équipement terminal :
   ∘ sauvegarde (1030) du ticket reçu via le message d'invitation,
- avant de transmettre le message d'acceptation au premier équipement terminal :
   ∘ production (1090) d'un message de demande de décodage de ticket comportant :
      ▪ le ticket sauvegardé,
      ▪ le résultat du traitement du ticket,
   ∘ émission (1100) du message de demande de décodage à destination d'un deuxième serveur intermédiaire,
   ∘ réception (1160) d'une réponse de décodage comportant au moins les clés de sessions de la communication en cours d'établissement,
   ∘ enregistrement (1170) des clés de sessions en les associant à des métadonnées de communication.

Ainsi, le procédé selon la présente invention peut s'affranchir d'une étape d'enregistrement préalable des équipements communicants à un serveur de gestion de clés qui fournirait une clé provisoire, en permettant au serveur lors de l'initiation de la communication de produire et configurer lui-même 2 clés et de les envoyer auxdits équipements.

Outre les caractéristiques principales qui viennent d'être mentionnées dans le paragraphe précédent, le procédé selon l'invention peut présenter une ou plusieurs caractéristiques complémentaires parmi les suivantes, considérées individuellement ou selon les combinaisons techniquement possibles :
- Le deuxième serveur intermédiaire, à la réception du message de demande de décodage, met en œuvre les étapes suivantes :
   ∘ production d'un message de résolution de ticket, selon le protocole de gestion de clé, comportant :
      ▪ le ticket sauvegardé,
      ▪ un identifiant spécifique désignant le deuxième serveur intermédiaire comme un invité particulier dans la communication en cours d'établissement,
   ∘ émission du message de résolution de ticket vers le serveur de gestion de clé,
   ∘ réception d'une réponse de résolution,
   ∘ production de la réponse de décodage en fonction de la réponse de résolution.
- Les métadonnées de communications sont choisies parmi un ensemble formé d'au moins :
   ∘ un identifiant unique de la communication,
   ∘ un identifiant de l'invitant,
   ∘ un identifiant de l'invité,
   ∘ une date de début de communication,
   ∘ une date de fin de communication.
- Les communications entre le premier serveur intermédiaire et le deuxième serveur intermédiaire se font en utilisant le protocole http.

### Brève description des figures

D'autres caractéristiques et avantages de l'invention ressortiront à la lecture de la description qui suit, en référence aux figures annexées, qui illustrent :
- La figure 1, une illustration d'une infrastructure permettant la mise en œuvre du procédé de sécurisation selon l'invention ;
- La figure 2, une illustration d'étapes du procédé de sécurisation selon l'invention.

Pour plus de clarté, les éléments identiques ou similaires sont repérés par des signes de référence identiques sur l'ensemble des figures.
L'invention sera mieux comprise à la lecture de la description qui suit et à l'examen des figures qui l'accompagnent. Celles-ci sont présentées à titre indicatif et nullement limitatif de l'invention.

### Description détaillée

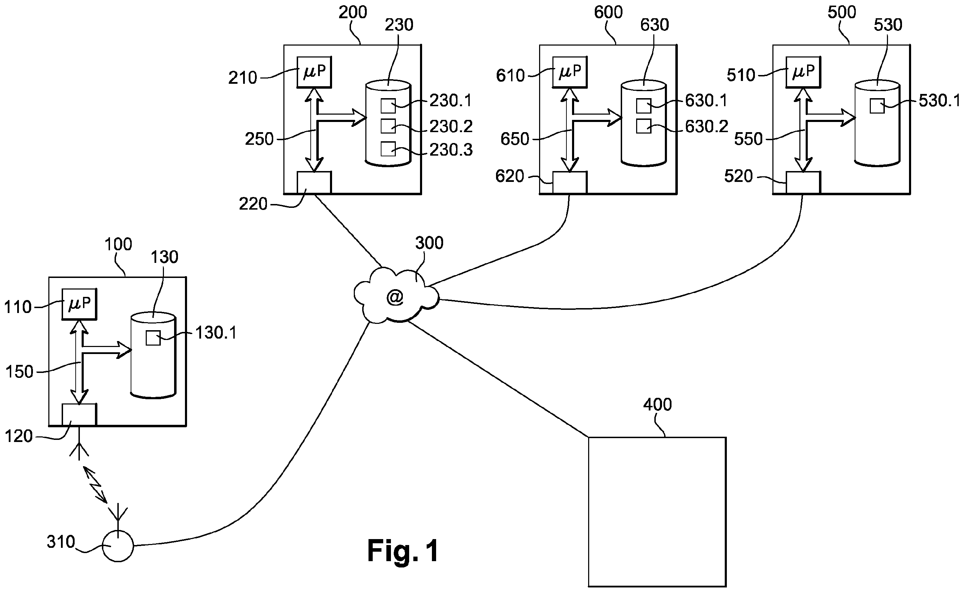

La figure 1 montre un premier serveur 200 intermédiaire. Le premier serveur 200 intermédiaire est aussi appelé un serveur proxy. Dans le cas de l'utilisation du protocole d'établissement de communication SIP (Session Initiation Procotol pour Protocole d'Initialisation de Session) on parle encore de proxy SIP.

La figure 1 montre que le premier serveur 200 intermédiaire comporte :
- Un microprocesseur 210 ;
- Une interface 220 de communication. Une telle interface de communication est, par exemple, une carte Ethernet, une carte InfiniBand, une carte Wifi,... .L'interface 220 de communication permet au serveur 200 intermédiaire de communiquer avec d'autre dispositifs ;
- Des moyens 230 de stockage. Des moyens de stockage sont, par exemple, des disques durs, des disques à état solide, une grille de disques,... . Ces moyens sont locaux ou distants.
D'une manière plus générale, pour d'autres dispositifs, les moyens de stockage peuvent aussi être réalisés avec des composants de type mémoire flash ou EPROM. La figure 1 montre que le microprocesseur du premier serveur intermédiaire, l'interface de communication du premier serveur intermédiaire et les moyens de stockage du premier serveur intermédiaire sont interconnectés par un bus 250.

La figure 1 montre que les moyens 230 de stockage du premier serveur intermédiaire comportent plusieurs zones parmi lesquelles au moins :
- Une zone 230.1 de sécurisation d'une communication. Cette zone de sécurisation d'une communication comporte des codes instructions qui, lorsqu'ils sont mis en œuvre par le premier serveur intermédiaire, conduisent celui-ci à mettre en œuvre le procédé selon l'invention ;
- Une zone 230.2 de cache de tickets permettant au premier serveur intermédiaire de conserver des tickets le temps requis par le traitement ;
- Une zone 230.3 de base de données de métadonnées de communication.

La figure 1 montre que le premier serveur 200 intermédiaire est connecté à un réseau 300 publique, par exemple le réseau Internet. On note que l'invention est aussi opérante si le réseau public n'est pas le réseau Internet mais un réseau compatible avec des protocoles utilisés sur le réseau Internet en particulier les protocoles nommés IP et les protocoles de transport associés.

Lorsque l'on prête une action à un dispositif celle-ci est en fait réalisée par un microprocesseur du dispositif commandé par des codes instructions enregistrés dans une mémoire du dispositif. Si l'on prête une action à une application, celle-ci est en fait effectuée par un microprocesseur du dispositif dans une mémoire duquel les codes instructions correspondant à l'application sont enregistrés. Lorsqu'un dispositif, ou une application émet un message, ce message est émis via une interface de communication dudit dispositif ou de ladite application. Un message comporte au moins un champ adresse de destination, un champ d'adresse d'émetteur et une charge utile. Ces principes sont applicables que le dispositif soit réel ou virtuel.

La figure 1 montre un premier équipement terminal 100. Le premier équipement terminal comporte :
- Un microprocesseur 110 ;
- Une interface 120 de communication. Dans le cas d'un équipement terminal l'interface de communication est, par exemple, une interface configurée pour pouvoir communiquer sur un réseau de téléphonie mobile, en particulier en mode données ;
- Des moyens 130 de stockage.
La figure 1 montre que le microprocesseur du premier équipement terminal, l'interface de communication du premier équipement terminal et les moyens de stockage du premier équipement terminal sont interconnectés par un bus 150.

La figure 1 montre que le premier équipement terminal 100 est connecté à une station de base 310 d'un réseau mobile non représenté. La station de base 310 est connectée au réseau public. Le premier équipement terminal est donc connecté au réseau public.

La figure 1 montre que les moyens 130 de stockage du premier équipement terminal comportent plusieurs zones parmi lesquels au moins :
- Une zone 130.1 agent SIP comportant des codes instructions pour permettre à l'équipement terminal de mettre en œuvre des communications selon le protocole SIP.

Dans la pratique le premier équipement terminal est un téléphone intelligent, aussi appelé smartphone, sur lequel on a installé un logiciel de communication compatible avec le protocole SIP. Un tel téléphone s'appelle aussi un téléphone SIP ou un SIP-phone. Un tel logiciel est également installable sur une tablette ou un ordinateur individuel. L'installation d'un tel logiciel fait que l'on peut parler du dispositif sur lequel il est installé, comme d'un agent utilisateur.

La figure 1 montre un deuxième équipement terminal 400 qui est lui aussi un agent utilisateur de même nature que le premier équipement terminal. C'est-à-dire que le premier équipement terminal et le deuxième équipement terminal peuvent établir une communication l'un avec l'autre.

La figure 1 montre un serveur 500 de gestion de clés. Le serveur 500 de gestion de clés comporte :
- Un microprocesseur 510 ;
- Une interface 520 de communication permettant de connecter le serveur gestion de clés au réseau 300 public. Le serveur de gestion de clés est donc en mesure de communiquer avec les dispositifs connectés au réseau 300 public ;
- Des moyens 530 de stockage.
La figure 1 montre que le microprocesseur du serveur de gestion de clés, l'interface de communication du serveur de gestion de clés et les moyens de stockage du serveur de gestion de clés sont interconnectés par un bus 550.

La figure 1 montre que les moyens 530 de stockage du serveur de gestion de clés comportent plusieurs zones parmi lesquels au moins :
- Une zone 530.1 de prise en charge du protocole MIKEY. Cette zone comporte de code instructions dont la mise en œuvre permet au serveur de gestion de clés de communiquer selon le protocole MIKEY.

La figure 1 montre un deuxième serveur 600 intermédiaire. La figure 1 montre que le deuxième serveur intermédiaire comporte :
- Un microprocesseur 610 ;
- Une interface 620 de communication permettant de connecter le serveur gestion de clés au réseau 300 public. Le serveur de gestion de clés est donc en mesure de communiquer avec les dispositifs connectés au réseau 300 public ;
- Des moyens 630 de stockage.
La figure 1 montre que le microprocesseur du deuxième serveur intermédiaire, l'interface de communication du deuxième serveur intermédiaire et les moyens de stockage du deuxième serveur intermédiaire sont interconnectés par un bus 650.

La figure 1 montre que les moyens 630 de stockage du deuxième serveur intermédiaire comportent plusieurs zones parmi lesquels au moins :
- Une zone 630.1 de prise en charge du protocole MIKEY. Cette zone comporte de code instructions dont la mise en œuvre permet au serveur de gestion de clés de communiquer selon le protocole MIKEY ;
- Une zone 630.2 de sécurisation d'une communication. Cette zone de sécurisation d'une communication comporte des codes instructions qui, lorsqu'ils sont mis en œuvre par le deuxième serveur intermédiaire, conduisent celui-ci à mettre en œuvre le procédé selon l'invention ;

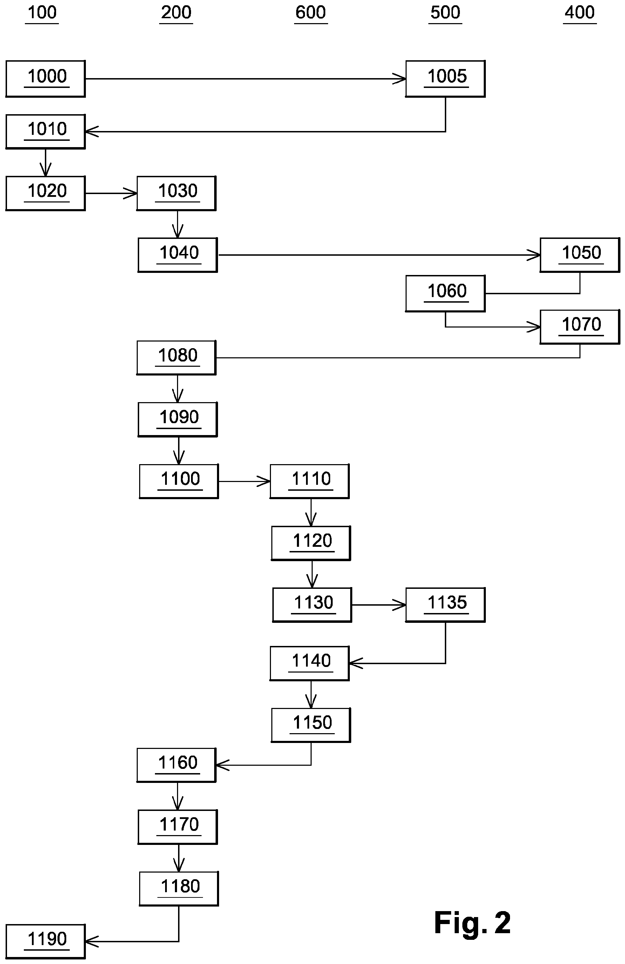

La figure 2 montre une étape 1000 d'initialisation d'une communication sécurisée. L'étape 1000 d'initialisation d'une communication est mise en œuvre par le premier équipement terminal qui émet un message de demande d'initialisation :
MT : REQUEST_INIT(Idi, Idr,...)
à destination du serveur de gestion de clé. Dans ce document on utilise le formalisme suivant pour désigner un message :
- Avant les deux points : le protocole utilisé pour le message
   ∘ MT : protocole MIKEY
   ∘ SIP : protocole SIP
   ∘ MTPROX : protocole spécifique de communication selon l'invention ;
- Après les deux points : le nom du message ;
- Entre parenthèse : les paramètres du message.
Le message d'initialisation d'une communication sécurisée est donc émis selon le protocole MIKEY est ses paramètres sont une liste d'identifiant de participants qui vont être invités à participer à la communication en cours d'initialisation. Le premier paramètre identifie le premier équipement terminal. Dans notre exemple le deuxième paramètre Idr identifie le deuxième équipement terminal.

La figure 2 montre une étape 1010 de réception, par le premier équipement terminal, d'un message de réponse au message de demande d'initialisation :
MT :REQUEST_RESP(k1, k2, TICKET)
Ce message a été produit par le serveur de gestion de clés dans une étape 1005 non décrite. Ce message comporte :
- Une clé pour chiffrer les données émises par le premier équipement terminal,
- Une clé pour déchiffrer les données émises par le deuxième équipement terminal,
- Un TICKET produit pour le serveur de gestions de clés. Le TICKET, est un terme consacré pour le protocole MIKEY, il s'agit essentiellement d'un identifiant, pour le serveur de gestion de clés, de la communication en cours d'initialisation.

De l'étape 1010 de réception d'un message de réponse au message de demande d'initialisation le premier équipement terminal passe à une étape 1020 de production et d'émission d'un message d'invitation SIP :
SIP : INVITE(key-mgmt : TICKET)
Ce message est émis à destination du premier serveur intermédiaire. Ce message a pour but d'inviter le deuxième équipement terminal, seul les éléments intéressant l'invention son traités.

La figure 2 montre une étape 1030 dans laquelle le premier serveur intermédiaire reçoit le message d'invitation SIP. Dans cette étape de réception d'une invitation SIP, le premier serveur intermédiaire détecte qu'il y a un paramètre dont le nom est « key-mgmt » et dont la valeur est un TICKET selon le protocole MIKEY. Le premier serveur intermédiaire enregistre alors ce TICKET dans une mémoire pour pouvoir le retrouver ultérieurement.

Le premier serveur intermédiaire passe alors à une étape 1040 dans laquelle il transmet le message d'invitation SIP au deuxième équipement terminal.

Dans une étape 1050 le deuxième équipement terminal reçoit le message d'invitation émis par le premier serveur intermédiaire. Dans la mesure où ce message d'invitation comporte une charge utile contenant une TICKET selon protocole MIKEY, le deuxième équipement terminal établit un dialogue avec le serveur de gestion de clé. On parle d'un dialogue de résolution de ticket. Pour établir de dialogue, le deuxième équipement terminal émet un message :
MT : RESOLVE(TICKET, Idr)
ou idr est l'identifiant du deuxième équipement terminal. C'est le même identifiant que celui qui a été utilisé pour le message de demande d'initialisation.

Ce dialogue de résolution de ticket est géré, par le serveur de gestion de clés, dans une étape 1060 de résolution de ticket. Dans l'étape de résolution de ticket le serveur de gestion de clé utilise les éléments du TICKET pour retrouver, entre autres, les clés associées la communication en cours d'initialisation.

Dans une étape 1070 le deuxième équipement terminal reçoit un message
MT : RESOLVE_RESP(k1, k2, TICKET_RESPONSE)
qui est le résultat de la résolution de ticket émis par le serveur de gestion de clé. A la réception de ce message le deuxième équipement terminal a connaissance des clés qui vont être utilisées pour la communication en cours d'initialisation. Le deuxième équipement terminal produit alors un message SIP d'acceptation d'invitation
SIP : OK(key-mgmt=TICKET_RESPONSE)
à destination du premier serveur intermédiaire.

Dans une étape 1080 le premier server intermédiaire reçoit le message d'acceptation d'une invitation SIP. Comme ce message d'acceptation comporte dans sa charge utile un paramètre nommé « key-mgmt » alors il sait que ce message est lié à une initialisation d'une communication mettant en œuvre le protocole MIKEY. Si tel n'avait pas été le cas, le premier serveur intermédiaire aurait simplement transmis le message d'acceptation au premier équipement terminal.
Comme le premier serveur intermédiaire constate qu'il y a eu utilisation du protocole MIKEY, alors il passe à une étape 1090 de décodage du TICKET avant de transmettre l'acceptation au premier équipement terminal. Dans cette étape le premier serveur intermédiaire produit un message de décodage :
MTPROX : DECODE(TICKET, TICKET_RESPONSE)
Pour produire ce message décodage, le premier serveur intermédiaire utilise le contenu du message d'acceptation SIP et le contenu sauvegardé pour de la réception du message de d'invitation SIP. Ce message une fois produit est émis vers le deuxième serveur intermédiaire. Ce message est, par exemple un message http GET ou POST. Les éléments TICKET et TICKET_RESPONSE sont alors des paramètres de la requête http et sont éventuellement encodé en base64 pour leur transmission. Le protocole que l'on nomme MTPROX dans ce document est donc une mise en œuvre du protocole http dans le contexte de communications entre le premier serveur intermédiaire et le deuxième serveur intermédiaire.

Dans une étape 1110 le deuxième serveur intermédiaire reçoit un message de décodage. Il passe alors à une étape 1120 de production d'un message de résolution de ticket
MT : RESOLVE(TICKET, 2pld)
Ce message de résolution est identique à celui produit par le deuxième équipement terminal sauf pour ce qui concerne l'identifiant utilisé. Le deuxième serveur intermédiaire utilise un identifiant qui lui est spécifique et qui permet au serveur de gestion de clés reconnaissant cet identifiant spécifique d'accepter la demande de résolution. Le serveur de gestion de clés a donc été préalablement configuré pour reconnaître cet identifiant spécifique. Cela est possible parce que, bien que non décrit, toutes les communications avec le serveur de gestion de clé se font après authentification. Cet identifiant spécifique permet au serveur de gestion de clé de considérer le deuxième serveur intermédiaire comme un invité à la conversation, bien que cet invité n'ait pas été déclaré par le premier équipement terminal.

Une fois le message de résolution produit, le deuxième serveur intermédiaire l'émet vers le serveur de gestion de clés dans une étape 1130.

Ce message de résolution est traité comme un message de résolution classique par le serveur de gestions de clé dans une étape 1135 non décrite.

Dans une étape 1140 le deuxième serveur intermédiaire reçoit un message de réponse de résolution :
MT : RESOLVE_RESP(k1, k2, TICKET_RESPONSE)
identique au message de réponse de résolution reçu par le deuxième équipement terminal. Du point de vue du serveur de gestion de clés, le deuxième serveur intermédiaire se comporte comme un équipement terminal invité à participer à une communication sécurisée. Le deuxième serveur intermédiaire passe alors à une étape 1150 de production d'une réponse de décodage :
MTPROX : DECODE_RESP(k1, k2)
Ce message de réponse de décodage est produit à partir du contenu du message réponse de résolution. Ce message permet au deuxième serveur intermédiaire de transmettre au premier serveur intermédiaire les clés de sessions utilisées pour la communication en cours d'initialisation.

Dans une étape 1160 le premier serveur intermédiaire reçoit le message de réponse de décodage.

Dans une étape 1170 le premier serveur intermédiaire traite le contenu du message réponse de décodage en mettant à jour une base de données de métadonnées de communication.

Après la mise à jour la base de données de métadonnées le premier serveur intermédiaire passe à une étape 1180 de transmission du message d'acceptation SIP au premier équipement terminal.

Une base de données de métadonnées de communication est une base de données qui permet à un opérateur de télécommunication d'enregistrer les informations légales associées à l'établissement de communications. Pour chaque communication c'est informations sont, par exemple :
- un identifiant unique de la communication,
- un identifiant de l'invitant, par exemple un numéro de téléphone, une adresse mail, une adresse IP...
- un identifiant de l'invité, par exemple un numéro de téléphone, une adresse mail, une adresse IP,...
- une date de début de communication,
- une date de fin de communication.
Avec l'invention on peut ajouter à ces éléments des clés de sessions.

Dans ce cas les clés de sessions peuvent être utilisée d'au moins deux manières :
- pour effectuer une écoute en directe d'une conversation ;
- pour effectuer une écoute en différée d'une communication enregistrée.
Dans les deux cas on considère qu'il s'agit d'intercepter une communication que ce soit en temps réel ou en temps différé.

Avec l'invention il est donc possible d'utiliser toutes les capacités de gestion de clés offertes par le protocole MIKEY et de respecter les obligations légales pesant sur les opérateurs de télécommunications. Cet objectif est de plus atteint en s'appuyant sur des serveurs intermédiaires, ou proxy SIP, du commerce. En effet il n'y a que très peu de modification à faire au niveau du proxy SIP. Toute la gestion du protocole MIKEY est déplacé au niveau du deuxième serveur intermédiaire qui lui offre une interface simple de communication avec le premier serveur intermédiaire.

## Revendications

1. Procédé de sécurisation de bout en bout d'une communication interceptable entre au moins un premier équipement (100) terminal et un deuxième équipement (400) terminal, dans lequel :
- l'établissement de la communication se fait, via un premier serveur (200) intermédiaire, qui communique en utilisant un protocole d'établissement de session permettant d'échanger des clés de sessions, chaque équipement terminal utilisant une clé de session pour chiffrer les données de communication qu'il émet,
- les clés de sessions sont distribuées par un serveur (500) de gestion de clés qui communique en utilisant un protocole de gestion de clés,
le procédé comportant au moins les étapes suivantes, mises en œuvre par le premier serveur intermédiaire :
- réception (1030) d'un message d'invitation, émis par le premier équipement terminal, selon le protocole d'établissement de session, le message d'invitation invitant le deuxième équipement terminal et comportant un ticket selon le protocole de gestion de clés,
- transmission du message d'invitation au deuxième équipement terminal,
- réception (1080) d'un message d'acceptation du message d'invitation comportant un résultat du traitement du ticket par le deuxième équipement terminal,
- transmission (1180) du message d'acceptation au premier équipement terminal,
**caractérisé en ce que** le procédé comporte également les étapes suivantes, mises en œuvre par le premier serveur intermédiaire :
- avant de transmettre le message d'invitation au deuxième équipement terminal :
∘ sauvegarde (1030) du ticket reçu via le message d'invitation,
- avant de transmettre (1180) le message d'acceptation au premier équipement terminal :
∘ production (1090) d'un message de demande de décodage de ticket comportant :
▪ le ticket sauvegardé,
▪ le résultat du traitement du ticket,
∘ émission (1100) du message de demande de décodage à destination d'un deuxième serveur intermédiaire,
∘ réception (1160) d'une réponse de décodage comportant au moins les clés de sessions de la communication en cours d'établissement,
∘ enregistrement (1170) des clés de sessions en les associant à de métadonnées de communication.

2. Procédé de sécurisation de bout en bout d'une communication interceptable selon la revendication 1, **caractérisé en ce que** le deuxième serveur intermédiaire, à la réception du message de demande de décodage, met en œuvre les étapes suivantes :
- production (1120) d'un message de résolution de ticket, selon le protocole de gestion de clé, comportant :
∘ le ticket sauvegardé,
∘ un identifiant spécifique désignant le deuxième serveur intermédiaire comme un invité particulier dans la communication en cours d'établissement,
- émission (1130) du message de résolution de ticket vers le serveur de gestion de clé,
- réception (1140) d'une réponse de résolution,
- production (1150) de la réponse de décodage en fonction de la réponse de résolution.

3. Procédé de sécurisation de bout en bout d'une communication interceptable selon l'une des revendications précédentes, **caractérisé en ce que** les métadonnées de communications sont choisies parmi un ensemble formé d'au moins :
- un identifiant unique de la communication,
- un identifiant de l'invitant,
- un identifiant de l'invité,
- une date de début de communication,
- une date de fin de communication.

4. Procédé de sécurisation de bout en bout d'une communication interceptable selon l'une des revendications précédentes, **caractérisé en ce que** les communications entre le premier serveur intermédiaire et le deuxième serveur intermédiaire se font en utilisant le protocole http.

## Patentansprüche

1. Verfahren zur End-to-End-Sicherung einer abhörbaren Kommunikation zwischen mindestens einem ersten Endgerät (100) und einem zweiten Endgerät (400), wobei:
- das Herstellen der Kommunikation über einen ersten Zwischenserver (200) erfolgt, der unter Verwendung eines Sitzungsaufbauprotokolls kommuniziert, das den Austausch von Sitzungsschlüsseln ermöglicht, wobei jedes Endgerät einen Sitzungsschlüssel verwendet, um die Kommunikationsdaten zu verschlüsseln, die es überträgt,
- die Sitzungsschlüssel von einem Schlüsselverwaltungsserver (500) verteilt werden, der über ein Schlüsselverwaltungsprotokoll kommuniziert,
wobei das Verfahren mindestens die folgenden Schritte umfasst, die von dem ersten Zwischenserver ausgeführt werden:
- Empfangen (1030) einer nach dem Sitzungsaufbauprotokoll von dem ersten Endgerät gesendeten Aufforderungsnachricht, wobei die Aufforderungsnachricht das zweite Endgerät auffordert und ein Ticket nach dem Schlüsselverwaltungsprotokoll umfasst,
- Übertragen der Aufforderungsnachricht an das zweite Endgerät,
- Empfangen (1080) einer Akzeptanznachricht der Aufforderungsnachricht, die ein Ergebnis der Verarbeitung des Tickets durch das zweite Endgerät umfasst,
- Übertragen (1180) der Akzeptanznachricht an das erste Endgerät,
**dadurch gekennzeichnet, dass** das Verfahren weiterhin die folgenden Schritte umfasst, die von dem ersten Zwischenserver ausgeführt werden:
- vor dem Übertragen der Akzeptanznachricht an das zweite Endgerät:
∘ Speichern (1030) des über die Aufforderungsnachricht empfangenen Tickets,
- vor dem Übertragen (1180) der Akzeptanznachricht an das erste Endgerät:
∘ Herstellen (1090) einer Ticketdecodierungsanforderungsnachricht, umfassend:
▪ das gespeicherte Ticket,
▪ das Ergebnis der Verarbeitung des Tickets,
∘ Übertragen (1100) der Decodierungsanforderungsnachricht an einen zweiten Zwischenserver,
∘ Empfangen (1160) einer Decodierungsantwort, die mindestens die Sitzungsschlüssel der Kommunikation umfasst, die hergestellt wird;
∘ Speichern (1170) der Sitzungsschlüssel durch Verknüpfen mit Kommunikationsmetadaten.

2. Verfahren zur End-to-End-Sicherung einer abhörbaren Kommunikation nach Anspruch 1, **dadurch gekennzeichnet, dass** der zweite Zwischenserver bei dem Empfang der Decodierungsanforderungsnachricht die folgenden Schritte ausführt:
- Herstellen (1120) einer Ticketauflösungsnachricht nach dem Schlüsselverwaltungsprotokoll, umfassend
∘ das gespeicherte Ticket,
∘ eine spezifische Kennung, die den zweiten Zwischenserver als einen bestimmten Aufgeforderten in der eingerichteten Kommunikation bezeichnet,
- Übertragen (1130) der Ticketauflösungsnachricht an den Schlüsselverwaltungsserver,
- Empfangen (1140) einer Auflösungsantwort,
- Herstellen (1150) der Decodierungsantwort gemäß der Auflösungsantwort.

3. Verfahren zur End-to-End-Sicherung einer abhörbaren Kommunikation nach einem der vorherigen Ansprüche, **dadurch gekennzeichnet, dass** die Kommunikationsmetadaten aus einem Satz ausgewählt werden, der mindestens aus Folgendem besteht:
- eine eindeutige Kennung der Kommunikation,
- eine Kennung des Aufforderers,
- eine Kennung des Aufgeforderten,
- ein Datum des Anfangs der Kommunikation,
- ein Datum des Endes der Kommunikation.

4. Verfahren zur End-to-End-Sicherung einer abhörbaren Kommunikation nach einem der vorherigen Ansprüche, **dadurch gekennzeichnet, dass** die Kommunikation zwischen dem ersten Zwischenserver und dem zweiten Zwischenserver unter Verwendung des http-Protokolls erfolgt.

## Claims

1. Method for providing end-to-end security of an interceptable communication between at least one first item of terminal equipment (100) and one second item of terminal equipment (400), in which:
- communication is established via a first intermediate server (200) which communicates using a session initiation protocol allowing exchange of session keys, each item of terminal equipment using a session key to encrypt the communication data which it transmits,
- the session keys are distributed by a key management server (500) which communicates using a key management protocol,
the method comprising at least the following steps, carried out by the first intermediate server:
- reception (1030) of an invite message, transmitted by the first item of terminal equipment, according to the session initiation protocol, the invite message inviting the second item of terminal equipment and comprising a ticket according to the key management protocol,
- transmission of the invite message to the second item of terminal equipment,
- reception (1080) of a message of acceptance of the invite message comprising a result of ticket processing by the second item of terminal equipment,
- transmission (1180) of the accept message to the first item of terminal equipment,
**characterised in that** the method also comprises the following steps, carried out by the first intermediate server:
- before transmitting the invite message to the second item of terminal equipment:
∘ saving (1030) the ticket received via the invite message,
- before transmitting (1180) the accept message to the first item of terminal equipment:
∘ production (1090) of a ticket decode request message comprising:
▪ the saved ticket,
▪ the result of ticket processing,
∘ transmission (1100) of the decode request message destined for a second intermediate server,
∘ reception (1160) of a decode response comprising at least the session keys of the communication being established,
∘ recording (1170) the session keys by combining them with communication metadata.

2. Method for providing end-to-end security of an interceptable communication according to claim 1, **characterised in that** the second intermediate server, upon reception of the decode request message, carries out the following steps:
- production (1120) of a ticket settlement message, according to the key management protocol, comprising:
∘ the saved ticket,
∘ a specific identifier designating the second intermediate server as a particular invited party in the communication being established,
- transmission (1130) of the ticket settlement message to the key management server,
- reception (1140) of a settlement response,
- production (1150) of the decode response as a function of the settlement response.

3. Method for providing end-to-end security of an interceptable communication according to one of the preceding claims, **characterised in that** the metadata of communications are selected from among a set composed of at least:
- a unique communication identifier,
- an inviting party identifier,
- an invited party identifier,
- a start-of-communication date,
- an end-of-communication date.

4. Method for providing end-to-end security of an interceptable communication according to one of the preceding claims, **characterised in that** the communications between the first intermediate server and the second intermediate server are made using the http protocol.
